**Europäisches Patentamt**

**European Patent Office**

**Office européen des brevets**

(19)

(11) Veröffentlichungsnummer: **0 263 305 B1**

(12) # EUROPÄISCHE PATENTSCHRIFT

(45) Veröffentlichungstag der Patentschrift: **07.08.91**

(51) Int. Cl.⁵: **G01D 3/02**

(21) Anmeldenummer: **87112921.9**

(22) Anmeldetag: **04.09.87**

---

(54) **Schaltungsanordnung zur Beeinflussung von Signalen.**

---

(30) Priorität: **03.10.86 DE 3633679**

(43) Veröffentlichungstag der Anmeldung:
**13.04.88 Patentblatt 88/15**

(45) Bekanntmachung des Hinweises auf die
Patenterteilung:
**07.08.91 Patentblatt 91/32**

(84) Benannte Vertragsstaaten:
**DE FR GB IT NL**

(56) Entgegenhaltungen:
**DE-A- 3 030 990**
**US-A- 4 030 092**

**PATENT ABSTRACTS OF JAPAN, Band 9, Nr.
151 (P-367)[1874], 26. June 1985; & JP-A-60 29
612 (SHIMAZU SEISAKUSHO K.K.) 15-02-1985**

**BROWN BOVERI MITTEILUNGEN, Band 57, Nr.
8/9, August/September 1970, Seiten 363-367;
G. MORNAGHINI: "Digital-Analog-Wandler für
das Fernwirksystem Indactic DASA"**

**P.H.Sydenham,Handbook of Measurement
Science (1982),Seite 252**

(73) Patentinhaber: **ROBERT BOSCH GMBH
Postfach 50
W-7000 Stuttgart 1(DE)**

(72) Erfinder: **Bollweber, Lothar
Silberaustrasse 25
W-7551 Steinmauern(DE)**
Erfinder: **Merkel, Rudolf
Erlenweg 22
W-7513 Stutensee(DE)**
Erfinder: **Zabler, Erich, Dr.-Ing.
Brunhildstrasse 11
W-7513 Stutensee 1(DE)**

---

## Beschreibung

Die Erfindung geht aus von einer Schaltungsanordnung zur Beeinflussung von Signalen nach der Gattung des Hauptanspruchs. Eine derartige Schaltung ist aus der Fachzeitschrift "Markt und Technik" Nr. 41, 1984, S. 56 bekannt. Es wird beschrieben, wie mit Hilfe einer integrierten digitalen Abgleichsschaltung bei der Messung von Drükken mit einem piezoresistiven Aufnehmer eine hohe Genauigkeit über einen weiten Temperaturbereich erreichbar ist. Die Werte zur Linearisierung und Temperaturdriftkorrektur des Drucksensorsignals sind in einem Halbleiterspeicher digital abgelegt und werden bei der Druckmessung zur Fehlerkompensation herangezogen. Das Sensorsignal wird von einem Verstärker, dessen Verstärkungsfaktor und dessen Offset elektrisch einstellbar sind, auf einen bestimmten Wert angehoben. Der Verstärkungsfaktor wird in Abhängigkeit von dem Sensorsignal selbst derart beeinflußt, so daß sich ein lineares Ausgangssignal im gesamten Druckmeßbereich ergibt. Eine zusätzliche Veränderung des Offsets kompensiert die Temperaturdrift. Sowohl für das Signal des Drucksensors als auch das Signal eines Temperatursensors sind zwei getrennte Analog-Digital-Wandler vorgesehen. Die digitalen Ausgangssignale der beide Wandler steuern einen Halbleiterspeicher an. Die Digitalwerte sind die Adressen der gespeicherten Korrekturwerte. Die Digitalwerte für den Verstärkungsfaktor und den Offset des Meßverstärkers wandeln zwei getrennte Digital/Analog-Wandler in die entsprechenden Analogwerte um, die dem Verstärker zugeführt werden.

Aus der JP-A-60-26 612 (Patent Abstracts of Japan, Vol 9, No. 151, 26. Juni 1985) ist eine Vorrichtung zum Testen von Industriegeräten bekannt, die eine schnelle Überprüfung der zu testenden Geräte ermöglicht. Mehrere Eingangssignale sind über einen Multiplexer einem Analog/Digital-Wandler zugeführt, der digitale Daten über eine Interface-Schaltung einer Rechenschaltung zuführt. Ferner sind mehrere Ausgangssignale vorgesehen, die von der Rechenschaltung über die Interface-Schaltung, einem Digital/Analog-Wandler und einem Demultiplexer nach außen geleitet sind. Ferner ist in dem Fachbuch von P.H. Sydenham, Handbook of Measurement Science (1982), Seite 525 eine Analog/Digital-Wandlung von mehreren analogen Signalen mit nur einem Analog/Digital-Wandler beschrieben, dessen Eingangssignal von einem Multiplexer geliefert wird, dessen Eingänge mit den unterschiedlichen analogen Signalquellen verbunden sind.

## Vorteile der Erfindung

Die erfindungsgemäße Schaltungsanordnung zur Beeinflussung von Signalen gemäß Anspruch 1 weist den Vorteil auf, daß im Korrektursignalpfad lediglich ein Digital/Analog-Wandler erforderlich ist. Erfindungsgemäß sind ein Demultiplexer, der das Ausgangssignal des Digital/Analog-Wandlers in mehrere Korrektursignale aufspaltet, jeweils ein Analogsignalspeicher für jedes Korrektursignal und eine Auswahlschaltung vorgesehen, die die Zuordnung der Korrektursignale zu den Analogsignalspeichern durch Vorgabe der Adresse für den Demultiplexer und durch Auswahl der entsprechenden Korrektursignaldatensätze im Speicher vornimmt.

Besonders einfach ist die Realisierung des Analog-Signalspeichers als Tiefpaß, der vorzugsweise als R-C-Kombination ausgeführt ist. Vorteilhafter Weise ist dem Tiefpaß ein Impedanzwandler nachgeschaltet.

Eine weitere Einsparung ergibt sich, wenn im Korrektursignalpfad für mehrere Korrektureingangssignale lediglich ein Analog-Digital-Wand-ler vorgesehen ist. Unterschiedliche Korrektureigangssignale werden erfindungsgemäß von einem Multiplexer in einer bestimmten Reihenfolge auf den Analog-Digital-Wandler geschaltet.

Mit der erfindungsgemäßen Schaltungsanordnung ergibt sich eine Einsparung an Schaltungsaufwand, welche die Integration der gesamten Schaltungsanordnung in ein einziges Bauelement vereinfacht.

## Zeichnung

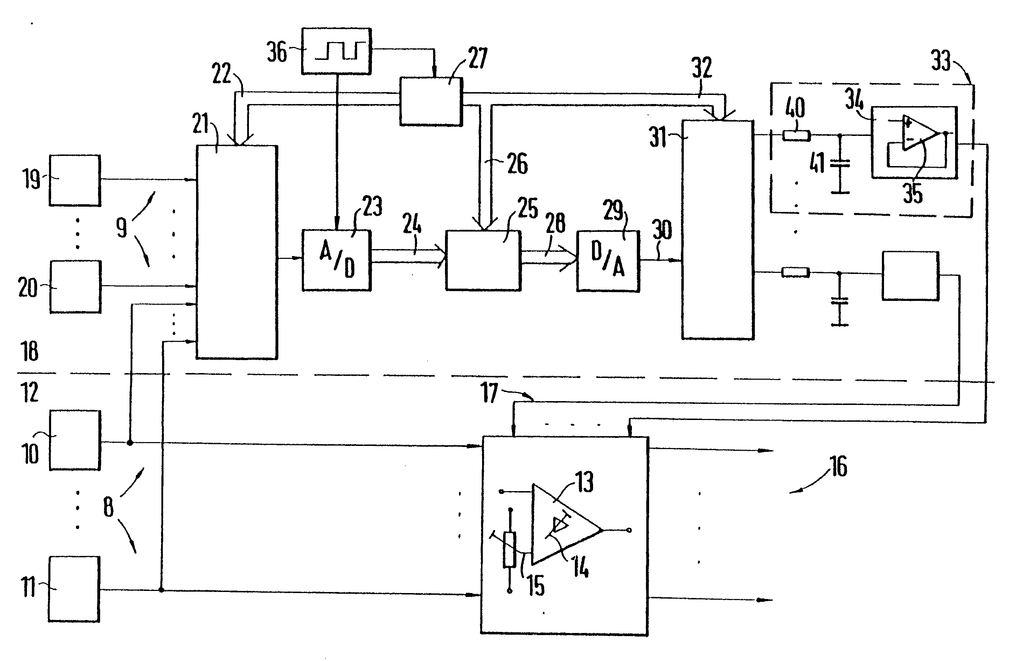

Die Figur zeigt ein Ausführungsbeispiel einer erfindungsgemäßen Schaltungsanordnung zur Beeinflussung von Signalen.

Signale 8 von Sensoren 10, 11 werden in einem Signalpfad 12 einstellbaren Verstärkern 13 zugeführt, deren Anzahl der der Sensoren 10, 11 entspricht, von denen jedoch aus Übersichtlichkeitsgründen nur einer gezeigt ist. Die Verstärker 13 sind so ausgelegt, daß der Verstärkungsfaktor 14 und/oder der Offset 15 mit einem elektrischen Signal einstellbar sind. An den Verstärkerausgängen 16 stehen die korrigierten Sensorsignale zur Verfügung.

Korrektursignale 17 zur Verstärkungsfaktoreinstellung 14 und Offsetveränderung 15 werden von einem Korrektursignalpfad 18 bereitgestellt. Die Ausgangssignale 8 der Sensoren 10, 11 sowie Ausgangssignale 9 von Hilfssensoren 19, 20 werden einem Multiplexer 21 zugeführt. In Abhängigkeit von einer angelegten Multiplexeradresse 22 wird eines der Eingangssignale 8, 9 des Multiplexers 21 auf einen Analog-Digital-Wandler 23 geschaltet. Das digitale Ausgangssignal 24 des Analog-Digital-Wandlers 23 wird einem Teil der Adresseingänge eines digitalen Speichers 25 zugeführt. Ein weiterer Teil der Adresseingänge 26 des Speichers 25 wird von einer Auswahlschaltung 27 angesteuert.

Die digitalen Ausgangssignale 28 des Speichers 25 werden in einem Digital-Analog-Wandler 29 in Analogwerte 30 umgesetzt. Ein Demultiplexer 31 schaltet in Abhängigkeit von einem Adressensignal 32 die Analogwerte 30 auf mehrere Analog-Signalspeicher 33. Die Analog-Signalspeicher 33 sind ausgeführt als R-C-Kombinationen 40, 41, denen erforderlichenfalls Impedanzwandler 34 nachgeschaltet sind, die vorzugsweise als voll gegengekoppelte Operationsverstärkerschaltungen 35 ausgeführt sind. An den Ausgängen der Impedanzwandler 34 liegen die Korrektursignale 17.

Ein Taktgenerator 36 steuert den Analog-Digital-Wandler 23 sowie die Auswahlschaltung 27 an, in der die Adressen des Multiplexers 21, des Demultiplexers 31 und des Speichers 25 ermittelt werden.

Die Schaltungsanordnung arbeitet folgendermaßen:

Die Signale 8 der Sensoren 10, 11 werden mit Verstärken 13 an den Verstärkerausgängen 16 auf bestimmte Werte verstärkt, die zur Weiterverarbeitung geeignet sind. Eine Nichtlinearität zwischen Signal 8 und der zu messenden Größe wird in einem der Verstärker 13 durch eine variable Verstärkung linearisiert. Zur Durchführung dieser Korrektur muß der Verstärkungsfaktor 14 in Abhängigkeit von dem zu verstärkenden Signal selbst ermittelt werden. Die Signale 8 werden deshalb dem Korrektursignalpfad 18 zugeführt. Dort gelangen sie über den Multiplexer 21 in einer bestimmten durch die Auswahlschaltung 27 festgelegten Reihenfolge an den Analog-Digital-Wandler 23. Das digitale Ausgangssignal 24 des Analog-Digital-Wandlers 23 stellt einen Teil des Adressbereichs des digitalen Speichers 25 dar. Ein ergänzender Teil wird über die Adressleitungen 26 von der Auswahlschaltung 27 angesteuert. Über die Adressleitungen 26 wird somit ein einem Signal 8 eine bestimmten Sensors 10, 11 zugeordneter Datensatz ausgewählt. In der mit den Adressleitungen 24 und 26 ausgewählten Speicherstelle steht der digitale Korrekturwert, der in dem nachgeschalteten Digital-Analog-Wandler 29 in einen Analogwert 30 umgesetzt wird.

Die Auswahlschaltung 27 legt die Adresse 32 des Demultiplexers 31 derart fest, daß der Analogwert 30 dem richtigen Korrektursignal 17 zugeordnet wird. Unterschiedliche Analogsignale werden in einer bestimmten zeitlichen Reihenfolge durch Adressenänderung 32 den Korrektursignalen 17 zugeordnet. Durch den lückenden Betrieb wird die Analogsignalspeicherung 33 erforderlich. Im einfachsten Fall ist hierfür ein Kondensator 41 vorgesehen, der über einen Widerstand 40 geladen wird. Diese Anordnung weist ein Tiefpaßverhalten auf. Der diskrete Widerstand 40 kann entfallen, wenn der ohnehin stets vorhandene Innenwiderstand des Demultiplexers 31 einen passenden Wert aufweist. Zweckmäßigerweise wird die am Speicherkondensator 41 anliegende Spannung impedanzgewandelt der weiteren Schaltungsanordnung weitergeleitet. Für die Impedanzwandlung eignet sich besonders ein voll gegengekoppelter Operationsverstärker 35.

Die zeitliche Steuerung bestimmt der Taktgenerator 36 in Verbindung mit der Auswahlschaltung 27. Die Auswahlschaltung 27 ist im einfachsten Falle als Zählerschaltung ausgebildet, die von dem Taktsignal des Taktgenerators 36 angesteuert wird. Die Anzahl der Datensätze im Speicher 25 entspricht der Anzahl der Korrektursignale 17, d.h. die Anzahl der unterschiedlichen Adressen, die über die Leitungen 26 im Speicher 25 und über die Leitungen 32 im Demultiplexer 31 adressiert werden können, sind gleich groß. Die Leitung können deshalb, wie in der Figur angedeutet, identisch sein.

Der Taktgenerator 36 steuert unmittelbar den Analog-Digital-Wandler 23 an, da in jedem Taktschritt außerdem eines Zyklus' eine Analog-Digital-Wandlung vorgenommen wird. Die Auswahl der unterschiedlichen Eingangssignale des Analog-Digital-Wandlers 23, die von der Auswahlschaltung 27 über die Adressenleitungen 22 im Multiplexer 21 vorgenommen werden, muß nicht mit der Anzahl der unterschiedlichen, gespeicherten Datensätze im Speicher 25 bzw. der Anzahl der unterschiedlichen Adressen 32 des Demultiplexers 31 entsprechen, da beispielsweise einem Eingangssignal 8, 9 des Multiplexers 21 mehrere Datensätze zur Korrektur der Signale 8 mehrerer Sensoren 10, 11 zugeordnet sein kann.

Neben der digitalen Korrektur der Nichtlinearität ist durch eine Veränderung des Offsets 15 der Verstärker 13 eine Änderung der Nulllage der Sensorsignale 8 durchführbar. Mit dieser Vorrichtung sind beispielsweise Temperatur-Feuchtigkeits- oder sonstige externe Einflüsse auf die Sensorsignale 8 korrigierbar. Zur Erfassung dieser Einflußgrößen sind die Sensoren 19, 20 vorgesehen. Die Ausgangssignale 9 dieser Hilfssensoren 19, 20 werden ebenso wie die Ausgangssignale 8 der Sensoren 10, 11 über den Multiplexer 21 dem Analog-Digital-Wandler 23 zugeleitet. Die Auswahlschaltung 27 muß auch in diesem Fall dafür sorgen, daß einem bestimmten Eingangssignal 8,9 des Multiplexers 21 der richtige Datensatz im Speicher 25 sowie ein bestimmtes Korrektursignal 17 zur Einstellung des Offsets eines Verstärkers 13 zugeordnet ist.

Anstelle der Singale 8 der Sensoren 10, 11 können auch andere zu beeinflussende Signale treten.

In einer weiteren Ausführungsform der erfindungsgemäßen Schaltungsanordnung werden mehrere Signale 8 der Sensoren 10, 11 über einen weiteren Multiplexer lediglich einem Verstärker 13 zugeführt. Am Verstärkerausgang 16 stehen die korrigierten Sensorsignale dann in einer bestimmten Reihenfolge zur Weiterverarbeitung bereit.

**Patentansprüche**

1. Schaltungsanordnung zur Beeinflussung wenigstens eines Signals, mit einem Signalpfad (12), in dem wenigstens ein das Signal (8) beeinflussender Verstärker (13) angeordnet ist, dessen Verstärkungsfaktor (14) und/oder Offset (15) mit Korrektursignalen (17) einstellbar sind, und mit einem Korrektursignalpfad (18), in dem zur Ermittlung der Korrektursignale (17) aus wenigstens einem Korrektureingangssignal (8, 9) ein Analog/Digital-Wandler (23), ein digitaler Speicher (25) und ein Digital/Analog-Wandler (29) vorgesehen sind, dadurch gekennzeichnet, daß zwischen dem Digital/Analog-Wandler (29) des Korrektursignalpfads (18) und dem Verstärker (13) des Signalpfades (12) ein Demultiplexer (31) und wenigstens ein Analogsignalspeicher (33) angeordnet sind, daß in dem Speicher (25) unterschiedliche Korrektursignaldatensätze entsprechend der Anzahl der Korrektursignale (17) abgelegt sind und daß eine Auswahlschaltung (27) vorgesehen ist, die die Zuordnung der Korrektursignale (17) zu den Analogsignalspeichern (33) durch Vorgabe der Adresse (32) für den Demultiplexer (31) und durch Auswahl der entsprechenden Korrektursignaldatensätze im Speicher (25) über Adressleitungen (26) vornimmt.

2. Schaltung nach Anspruch 1, dadurch gekennzeichnet, daß der Analogsignalspeicher als Tiefpaß ausgebildet ist.

3. Schaltung nach Anspruch 2, dadurch gekennzeichnet, daß der Tiefpaß als Widerstands-Kondensator-Kombination (40, 41) ausgeführt ist.

4. Schaltung nach Anspruch 2 oder 3, dadurch gekennzeichnet, daß zur Pufferung des Korrektursignals dem Tiefpasses ein Impedanzwandler (34) nachgeschaltet ist.

5. Schaltung nach Anspruch 4, dadurch gekennzeichnet, daß der Impedanzwandler (34) als vollständig gegengekoppelter Operationsverstärker ausgeführt ist.

6. Schaltung nach einem der Ansprüche 1 bis 5, dadurch gekennzeichnet, daß das Korrektureingangssignal (8, 9) gleich dem zu beeinflussenden Signal (8) ist.

7. Schaltung nach einem der Ansprüche 1 bis 5, dadurch gekennzeichnet, daß das zu beeinflussende Signal das Ausgangssignal (9) wenigstens eines Sensors (19, 20) ist.

8. Schaltung nach einem der Ansprüche 1 bis 7, dadurch gekennzeichnet, daß im Korrekturpfad (18) vor dem Analog-Digital-Wandler (23) ein Multiplexer (21) vorgesehen ist.

**Claims**

1. Circuit arrangement for influencing at least one signal, having a signal path (12) in which there is arranged at least one amplifier (13), which influences the signal (8) and whose gain (14) and/or offset (15) are adjustable by means of correction signals (17), and having a correction signal path (18), in which an analogue/digital converter (23), a digital memory (25) and a digital/analogue converter (29) are provided to determine the correction signals (17) from at least one correction input signal (8, 9), characterised in that a demultiplexer (31) and at least one analogue signal memory (33) are arranged between the digital/analogue converter (29) of the correction signal path (18) and the amplifier (13) of the signal path (12), in that different correction signal data records are stored in the memory (25) according to the number of the correction signals (17), and in that a selector module (27) is provided which undertakes the allocation of the correction signals (17) to the analogue signal memories (33) by stipulating the address (32) for the demultiplexer (31) and by selecting the corresponding correction signal data records in the memory (25) via address lines (26).

2. Circuit according to Claim 1, characterised in that the analogue signal memory is constructed as a low pass.

3. Circuit according to Claim 2, characterised in that the low pass is embodied as a resistor-capacitor combination (40, 41).

4. Circuit according to Claim 2 or 3, characterised in that an impedance converter (34) is connected downstream of the low pass in order to buffer the correction signal.

5. Circuit according to Claim 4, characterised in that the impedance converter (34) is embodied as a completely degenerative operational amplifier.

6. Circuit according to one of Claims 1 to 5, characterised in that the correction input signal (8, 9) is equal to the signal (8) to be influenced.

7. Circuit according to one of Claims 1 to 5, characterised in that the signal to be influenced is the output signal (9) of at least one sensor (19, 20).

8. Circuit according to one of Claims 1 to, characterised in that a multiplexer (21) is provided in the correction path (18) upstream of the analogue-digital converter (23).

**Revendications**

1. Agencement de circuit Pour traiter au moins un signal, avec un trajet de signal (12) dans lequel est disposé au moins un amplificateur (13) en traitant le signal (8), amplificateur dont le facteur d'amplification (14) et/ou le décalage (15) sont susceptibles d'être réglés par des signaux de correction (17), et avec un trajet de signal de correction (18) sur lequel dont prévus pour déterminer les signaux de correction (17), à partir d'au moins un signal d'entrée de correction (8, 9), un convertisseur analogique - numérique (23), une mémoire numérique (25), et un convertisseur numérique-analogique (29), agencement de circuit caractérisé en ce que, entre le convertisseur numérique-analogique (29) du trajet des signaux de correction (18) et l'amplificateur (13) du trajet des signaux (12), sont disposés un démultiplexeur (31) et au moins une mémoire de signaux analogiques (33), en ce que, dans la mémoire (25) sont déposés différents jeux de données de signal de correction correspondant au nombre des signaux de correction (17), et en ce qu'il est prévu un circuit de sélection (27) qui assure, par l'intermédiaire de liaisons d'adressage (26) l'association des signaux de correction (17) aux mémoires de signaux analogiques (33) par prédéfinition des adresses (32) pour le démultiplexeur (31) et par sélection des jeux de données de signaux de correction correspondants dans la mémoire (25).

2. Circuit selon la revendication 1, caractérisé en ce que la mémoire de signaux analogiques est réalisée sous la forme d'un filtre passe-bas.

3. Circuit selon la revendication 2, caractérisé en ce que le filtre passe-bas est réalisé sous la forme d'une combinaison résistance-condensateur (40, 41).

4. Circuit selon la revendication 2 ou la revendication 3, caractérisé en ce que, pour le tamponnage du signal de correction, un adaptateur d'impédance (34) est branché à la suite du filtre passe-bas.

5. Circuit selon la revendication 4, caractérisé en ce que l'adaptateur d'impédance (34) est réalisé sous la forme d'un amplificateur opérationnel complètement contre-couplé.

6. Circuit selon une des revendications 1 à 5, caractérisé en ce que le signal d'entrée de correction (8, 9) est identique au signal (8) à traiter.

7. Circuit selon une des revendications 1 à 5, caractérisé en ce que le signal à traiter est le signal de sortie (9) d'au moins un capteur (19, 20).

8. Circuit selon une des revendications 1 à 7, caractérisé en ce que, sur le trajet des signaux de correction (18) il est prévu avant le convertisseur analogique-numérique (23), un multiplexeur (21).